# EUROPEAN PATENT SPECIFICATION

(11) **EP 0 496 805 B1**
(45) Date of publication and mention of the grant of the patent: **07.06.1995**
(21) Application number: 90916155.6
(22) Date of filing: 05.10.1990
(51) Int. Cl.: C08L 27/06, C08K 5/07, C08K 5/10

(54) **LIQUID ELECTRICAL TAPE FORMULATION**
FLÜSSIGE ZUSAMMENSETZUNG FÜR ELEKTRISCHE BÄNDER
COMPOSITION LIQUIDE POUR BANDE ELECTRIQUE

(30) Priority: 20.10.1989 US 424466
(43) Date of publication of application: 05.08.1992
(73) Proprietor: STAR BRITE INTERNATIONAL CORPORATION, Ft. Lauderdale, FL 33314 (US)
(72) Inventor: DORNAU, Peter, Ft. Lauderdale, FL 33314 (US); RUSSO, Robert, R., Bayville, NJ 08721 (US); TIEGER, Jeffrey, Plantation, FL 33324 (US)
(74) Representative: Shaw, Laurence
(86) International application number: US9005719
(87) International publication number: WO9105822

(56) References cited:
- FR-A- 1 281 321
- US-A- 3 011 999
- US-A- 3 607 805
- US-A- 4 447 569
- US-A- 4 571 410
- US-A- 4 636 543
- US-A- 4 683 263
- G. HAWLEY "The Condensed Chemical Dictionary" 10th Edition, published 1981, by Van Nostrand Reinhold Co. (New York), see page 677.

## Description

This invention relates to a liquid composition for making an electrically insulating coating, for instance, for protecting electrical connections, or on any object or area where an insulating or protective coating is desired, particularly where it is difficult to use insulating tape. Such compositions are known as "liquid electrical tape compositions" and tend either to have poor spreading or film forming characteristics or to form coatings which become brittle after application. The liquid compositions have a low shelf life because they tend to harden with time: thus, such formulations would tend to set, harden or polymerize in the container.

US-A-2427513 discloses a composition comprising vinyl polymers, a plasticizer and a mixture of solvents, and pigments, and useful for a variety of industrial purposes including as electrically insulating coatings.

FR-A-1281321 discloses a vinyl composition intended to form peelable surface coverings and comprising a vinyl copolymer, a solvent, a plasticiser and a stabiliser.

It is a principle object of the present invention to provide a liquid electrical tape composition having significant shelf life.

A further object of the present invention is to provide a liquid electrical tape formulation that adheres to metal, plastics, vinyl, rubber and composite surfaces.

According to the invention there is provided a liquid composition of prolonged shelf life and for use in making an electrically insulating or protective vinyl based coating, the composition comprising a vinyl copolymer comprising a major proportion of a vinychloride and a minor proportion of vinylacetate, a plasticiser therefor, a stabilizer and a solvent, the solvent including a drying agent characterised in that the stabilizer is present in a concentration of from 3 to 5% by weight of the composition to control the release of acid, the plasticiser is present in a concentration of 5 to 15% by weight of composition, the weight ratio of vinyl copolymer to plasticiser is about 2 to 2.5:1 and in that the composition additionally includes a thixotropic agent in a concentration of 1 to 2% by weight.

The vinyl copolymer comprises a major proportion of polyvinylchloride and a minor proportion of polyvinylacetate. A preferred vinyl copolymer is available as VYHH (Union Carbide Company, USA) which is composed of 86% by weight of polyvinylchloride and 14% by weight of polyvinylacetate. It has an approximate specific gravity of 1.36 and is normally presented in a solid granular form that is readily soluble in solvents used with the present invention. If the vinyl component is substantially entirely polyvinylchloride, the vinyl component will be less soluble in the other components, particularly the solvents and will also be too crystalline. The presence of polyvinylacetate will facilitate the formation of a good clear solution. The content of the vinyl copolymer may vary from 10% to 60% by weight; a preferred amount is 25% by weight.

A preferred plasticizer is dioctylphthalate. Other suitable plasticizers are castor oil, other phthalates and soya bean based plasticizers. This plasticizer affords flexibility to the dried or set composition so that it will not crack or separate under the force of vibration. As indicated above the concentration of plasticizer may vary from 5% to 15% by weight. If too much plasticizer is used, the formulation will "weep" as the plasticizer migrates to the surface.

It is important that the weight ratio of vinyl copolymer to the plasticizer e.g. dioctylphthalate is in the vicinity of 2 to 2.5:1. Above this ratio a relatively rigid final coating that will fracture and separate from the substrate is formed whereas if the ratio is less than 2:1 the composition may not harden well.

The solvent comprises a mixture. Toluene is present because it is a very effective drying agent whose flammability is controlled by the presence of methylenechloride. The preferred content of toluene is from 10% to 15% by weight. If the amount of toluene exceeds 20%, the overall formulation will "skin" immediately and/or flash too quickly.

It may even dry on the brush. If the toluene content is less than 10%, the vinyl copolymer could precipitate out of solution. Methylethylketone is present as solvent for both the vinyl copolymer and a thixotropic agent and for additional quick drying properties. The preferred content of methylethylketone is from 20% to 40% by weight. Where less is present it would be near to impossible to keep the vinyl and rubber based resin in solution and a seeding out or thickening will occur. Where more is present there is a dramatic increase in the dry rate and stability in small quantities will be reduced significantly.

Methylenechloride is present because it has good flammability resistance (raises flashpoint to exceed -6.7°C (2O°F) and adds good film forming or coating properties. It is preferably present in a concentration of from 10 to 20% by weight.

On storage at elevated temperatures, a composition without the stabilizer will tend to release acid which will interact with the inside surface of a metal container to initiate unwanted i.e. premature polymerization of the vinyl copolymer. A composition of the invention when in a metal container has its stabilizer to prevent the release of acid from the composition and thereby prevent the release of acid and the unwanted, premature polymerisation of the vinyl copolymer. The content of stabilizer may vary from 3 to 5 by weight. The preferred stabiliser is an epoxy resin liquid. The preferred epoxy stabilizer is known as ERL 42-21 made by Union Carbide Co., USA. and in an amount of about 5% by weight. Another epoxy stabilizer, used in an amount of 3% in the composition is made by Shell Corporation and is known as Shell Epon® 828.

A preferred thixotropic agent is AC 4 Pliolite® (manufactured by the Goodyear Corporation of Akron, Ohio, USA). AC 4 Pliolite® is a modified vinyl toluene acrylate copolymer having a melting point of 54°C and a specific gravity of 2.08. Other suitable thixotropic agents are organic clays, fumed silicas and aluminium compounds. The thixotropic agent provides body or thickness to the composition. This will bring about not only better film forming properties, but more importantly, will prevent the composition from running; instead the composition will tend to adhere to the surface to which it has been applied. As indicated above, the concentration of thixotropic agent is from 1 to 2% by weight. If too much thixotropic agent is used, the composition will not pour well: if too little is used, the composition may be thin and runny.

### A preferred composition is (by weight):

| | |
|---|---|
| vinyl copolymer - VYHH | 23.68 |
| plasticizer - dioctylphthalate | 9.31 |
| thixotropic agent - AC 4 Pliolite® | 1.52 |
| epoxy stabilizer (ERL 42-21 (Union Carbide) | 5.00 |
| methylethylketone | 38.52 |
| toluene | 13.88 |
| methylenechloride | 13.10 |

A composition of the invention may form insulating and protective coatings on articles such as bilge pumps, outdoor exposed wiring, sprinkler pumps, timers, underground wiring, outdoor lighting fixtures, instruments, computers and other places where a weatherproof and dependable connection is needed or where irregular shapes are involved. Suitable compositions preferably have a viscosity between 2,000 and 2,500 mPa.s (centipoise) on a Brookfield viscometer at 26^{o}C (78^{o}F), 20 RPM and a No. 4 spindle. The reading should be taken after five revolutions.

## Claims

1. A liquid composition of prolonged shelf life and for use in making an electrically insulating or protective vinyl based coating, the composition comprising a vinyl copolymer comprising a major proportion of a vinylchloride and a minor proportion of vinylacetate, a plasticiser therefor, a stabilizer and a solvent, the solvent including a drying agent characterised in that the stabilizer is present in a concentration of from 3 to 5% by weight of the composition to control the release of acid, the plasticiser is present in a concentration of 5 to 15% by weight of composition, the weight ratio of vinyl copolymer to plasticiser is about 2 to 2.5:1 and in that the composition additionally includes a thixotropic agent in a concentration of 1 to 2% by weight.

2. A composition according to Claim 1, characterised in that the stabilizer is an epoxy resin liquid.

3. A composition according to Claim 1 or 2 characterised in that the solvent comprises (percentage by weight of the composition)
10 to 15 toluene
20 to 40 methylethylketone
10 to 20 methylene chloride

4. A composition according to any preceding Claim characterised in that the thixotropic agent is a vinyl toluene acrylate copolymer.

5. A composition according to any preceding Claim characterised in that the liquid has a viscosity of between 2000 and 2500 mPa.s (centipoise) on a Brookfield viscometer at about 26^{o}C (78^{o}F), 20RPM and No 4 spindle.

6. A liquid composition according to any preceding claim characterised by being present in a metal container, the stabilizer being present to prevent the release of acid from the composition which would interact with the inside surface of the metal container to initiate polymerization of the vinyl copolymer.

## Patentansprüche

1. Flüssigkeitszusammensetzung mit verlängerter Lagerfähigkeit zur Verwendung bei der Herstellung von elektrisch isolierenden oder schützenden Beschichtungen auf Vinylbasis, wobei die Zusammensetzung ein Vinyl-Copolymer mit einem großen Anteil eines Vinychlorids und einem kleinen Anteil Vinylacetat, einem Weichmacher dafür, einem Stabilisator und einem Lösungsmittel enthält, wobei das Lösungsmittel ein Trocknungsmittel beinhaltet, dadurch gekennzeichnet, daß der Stabilisator in einer Konzentration zwischen 3 und 5 Gew.-% der Zusammensetzung vorliegt, um die Freisetzung von Säure zu kontrollieren, der Weichmacher in einer Konzentration von 5 bis 15 Gew.-% der Zusammensetzung vorliegt, wobei das Gewichtsverhältnis zwischen Vinylcopolymer und Weichmacher bei etwa 2 bis 2,5:1 liegt, und dadurch, daß die Zusammensetzung zusätzlich ein Thixotropiermittel in einer Konzentration von 1 bis 2 Gew.-% enthält.

2. Zusammensetzung nach Anspruch 1, dadurch gekennzeichnet, daß der Stabilisator eine Epoxyharzflüssigkeit ist.

3. Zusammensetzung nach Anspruch 1 oder 2, dadurch gekennzeichnet, daß das Lösungsmittel die folgenden Bestandteile aufweist (prozentualer Gewichtsanteil an der Zusammensetzung):
10 bis 15 Toluol
20 bis 40 Methylethylketon
10 bis 20 Methylenchlorid.

4. Zusammensetzung nach einem der vorhergehenden Ansprüche, dadurch gekennzeichnet, daß das Thixotropiermittel ein Vinyltoluolacrylat-Copolymer ist.

5. Zusammensetzung nach einem der vorhergehenden Ansprüche, dadurch gekennzeichnet, daß die Flüssigkeit eine Viskosität zwischen 2000 und 2500 mPa (Centipoise) auf einem Brookfield-Viskosimeter bei etwa 26°C (78°F), 20 U/min und einer Spindel Nr. 4 hat.

6. Flüssigkeitszusammensetzung nach einem der vorhergehenden Ansprüche, dadurch gekennzeichnet, daß sie in einem Metallbehälter vorhanden ist, wobei der Stabilisator die Aufgabe hat, die Freisetzung von Säure aus der Zusammensetzung zu verhindern, die mit der Innenseite des Metallbehälters reagieren und eine Polymerisation des Vinylcopolymers einleiten würde.

## Revendications

1. Composition d'un liquide ayant une durée de conservation prolongée, utilisé dans la fabrication de l'enrobage d'une isolation ou d'une protection électrique à base de vinyle, la composition comprenant un copolymère de vinyle contenant une importante proportion de chlorure de vinyle et une petite proportion d'acétate de vinyle, un plastifiant de ces constituants, un stabilisateur et un solvant, le solvant comprenant un agent de séchage, caractérisée en ce que le stabilisateur est présent sous forme de concentration de 3 à 5 % par poids de composition afin de maîtriser la libération d'acide, le plastifiant étant présent sous forme de concentration de 5 à 15 % par poids de composition, le rapport ponctuel copolymère : plastifiant étant de 2 à 2,5 : 1, et en ce que la composition comprend également un agent thixotrope sous forme de concentration de 1 à 2 % par poids.

2. Composition qui, selon la revendication 1, est caractérisée en ce que le stabilisateur est un liquide de résine époxyde.

3. Composition qui, selon les revendications 1 ou 2, est caractérisée en ce que le solvant comprend (pourcentage par poids de la composition)
de 10 à 15 de toluène
de 20 à 40 de méthyléthylcétone
de 10 à 20 de chlorure de méthylène

4. Composition qui, selon l'une des revendications précédentes, est caractérisée en ce que l'agent thixotrope est un copolymère acrylique de toluène de vinyle.

5. Composition qui, selon l'une des revendications précédentes, est caractérisée en ce que le liquide accuse une viscosité variant de 2000 à 2500 m Po.s (centipoises) sur un viscomètre Brookfield, à une température de 26°C (78°F), à raison de 20 rpm avec un pivot n°4.

6. Composition d'un liquide qui, selon toute revendication précédente, est caractérisée en ce qu'elle est renfermée dans un conteneur en métal, le stabilisateur étant présent afin d'empêcher la perte d'acide à partir de la composition, ce qui provoquerait une interaction avec la surface intérieure du conteneur en métal conduisant à la polymérisation du copolymère de vinyle.
